# EUROPEAN PATENT SPECIFICATION

(11) **EP 1 414 210 B1**
(45) Date of publication and mention of the grant of the patent: **23.04.2008**
(21) Application number: 02023948.9
(22) Date of filing: 25.10.2002
(51) Int. Cl.: H04L 29/06, G06F 21/00, H04L 9/32

(54) **Method and apparatus for handling a trusted clock value**
Verfahren und Vorrichtung zur Handlung eines vertrauenswürdigen Uhrwertes
Procédé et appareil pour la gestion d'une valeur d'horloge fiable

(43) Date of publication of application: 28.04.2004
(73) Proprietor: Sony Ericsson Mobile Communications AB, 221 88 Lund (SE)
(72) Inventor: Andersson, Stefan, 230 41 Klagerup (SE)
(74) Representative: Andersson, Björn E.

(56) References cited:
- EP-A- 0 635 790
- EP-A- 1 217 850
- LEVINE J: "Authenticating time and frequency signals" PROCEEDINGS OF THE 1999 JOINT MEETING OF THE EUROPEAN FREQUENCY AND TIME FORUM AND THE IEEE INTERNATIONAL FREQUENCY CONTROL SYMPOSIUM (CAT. NO.99CH36313), PROCEEDINGS OF THE 1999 JOINT MEETING OF THE EUROPEAN FREQUENCY AND TIME FORUM AND THE IEEE INT, vol. 1, pages 304-308, XP010377652 1999, Piscataway, NJ, USA, IEEE, USA ISBN: 0-7803-5400-1
- MILLS D L: "NETWORK TIME PROTOCOL (VERSION 3) SPECIFICATION, IMPLEMENTATION ANDANALYSIS" NETWORK WORKING GROUP. NETWORK TIME PROTOCOL (VERSION 3) SPECIFICATION, IMPLEMENTATION AND ANALYSIS, XX, XX, March 1992 (1992-03), pages I-VII,1-113, XP002935527
- SCHNEIER BRUCE: "Applied Cryptography, Second Edition" , APPLIED CRYPTOGRAPHY. PROTOCOLS, ALGORITHMS, AND SOURCE CODE IN C, NEW YORK, JOHN WILEY & SONS, US, PAGE(S) 31-42 XP002236553 ISBN: 0-471-11709-9 * page 33, line 23-33 * * page 38, line 23-37 * * page 42 *

## Description

### Field of the Invention

The present invention relates to method for handling a trusted clock value transmitted from a time provider to an electronic equipment. Further, the present invention relates to electronic equipment adapted to handle a trusted clock value according to the inventive method, and a trusted time provider adapted to provide the trusted clock value.

### Description of Related Art

In electronic equipment there is an increasing need for providing a trusted or secure clock value, which does not differ from the clock value of a network to which the electronic equipment may be connected for e.g. downloading content. Also, there is a need for downloading a trusted clock value, which may be utilized for updating or setting a secure clock of the electronic equipment according to a trusted source located remotely from said equipment. Moreover, it is often required that the secure clock is set without intervention by the user of the equipment, and more particularly the user should not be able to set or otherwise manipulate the secure clock. Also, the trusted clock value may be utilized for determine whether the user has the right to utilize content, which is restricted to use during a certain period of time.

More and more content is delivered online in digital format from a content provider to an electronic equipment over a communication network, such as a local area network or a wide area network. Delivering online is convenient both for the service provider and the user. Examples of electronic equipment is a common PC computer having access to the Internet, or a portable radio communication equipment, such as a mobile telephone, a pager, or a communicator connected to a telecommunication system. Through the electronic equipment it is possible to download call signals, games, music files, videos etc to the electronic equipment from a content provider.

For digitally or network distributed content it is increasingly common that the service provider gives or sells the content to the user, but restricts rights to use the content even after the content is in the control of the client. For example, the content provider may restrict the use of a call signal or a music file a certain period of time. Also, the provider may adjust pricing according to the length of the user time/license term. DRM (Digital Rights Management) is becoming a central requirement for online commerce. In many DRM systems time intervals are set for when a particular action of a piece of content is allowed. However, this protection can easily be circumvented if the user of the electronic equipment e.g. can modify the clock of the equipment controlling the restricted time interval. Therefore, the clock can only be considered secure if the user cannot modify the clock. Consequently, the need of a secure clock is necessary if the user should be able to use the electronic equipment to download content from a DRM system. Alternatively, the electronic equipment may download a trusted clock value each time the previously downloaded content is to be utilized. In such a case, the downloaded secure or trusted clock value is compared to a time value associated with the content. However, the secure or trusted time value has to be transmitted to the electronic equipment in a secure manner.

A known service which could be modified to transmit a trusted clock value to a portable radio equipment is the GSM/UMTS (Global Systems for Mobile communications/Universal Mobile Telecommunications System) service NITZ (Network Identity and Time Zone), wherein the current network time is broadcasted to the electronic communication equipment from the network operator for setting the user clock of the portable radio equipment. However, there are some drawbacks with using NITZ as the trusted time source for updating one or several secure clocks, as GSM networks do not support network authentication. Therefore, the GSM networks are weak against a false base station, which may be used to reset the secure clock or transmit a clock value, which is not trusted. A content provider may therefore not trust the clock of the operator if a secure transmission protocol not is utilized. Consequently, there is a need for defining additional mechanisms for transmitting the trusted clock value and make the NITZ system resist false base station attacks if the NITZ system should be utilized for the transmission of the trusted clock value. As should be noted, the method according to the invention may be incorporated in different protocols, wherein one or several secure clocks are to be set, such as DRM systems as described above.

US-A-6 330 670 is an operating system for DRM disclosed, wherein an operating system is utilized to validate signed software. A monotonic counter is utilized to ensure that a clock of the computer cannot be set backwards. The computer connects a time provider to get a certificate binding the value of the monotonic counter to the current time, and to validate signed software. However, it is necessary to update the monotonic counter periodically to keep the approximation of a secure clock trusted. A disadvantage with the technique utilized in the operating system is that it is only in use when the DRM operating system is running. Therefore, it is not possible to use the certificate for updating the user clock of the electronic equipment when the DRM operating system is not running. Another disadvantage with the previous art is that only a counter value is sent to the user equipment. Therefore, it is impossible to chose to not update the secure clock although the actual time is correct, as the time provider cannot determine whether the actual time is valid.

The document LEVINE J: "Authenticating time and frequency signals" (PROCEEDINGS OF THE 1999 JOINT MEETING OF THE EUROPEAN FREQUENCY AND TIME FORUM AND THE IEEE INTERNATIONAL FREQUENCY CONTROL SYMPOSIUM, vol. 1, pages 304-308, Piscataway, NJ, USA, IEEE, USA ISBN: 0-7803-5400-1) discloses a protocol based on the standard NTP for authenticating digital time signals transmitted between time servers and client systems. Public key methods are used to define symmetric session keys for authenticating the transmissions.

The patent application EP-A-0 635 790 discloses a secure time-keeping system wherein each client in the network is equipped with its own secure clock mechanism. The clients retrieve trusted clock values from a server. The clients and the server use shared keys for encrypting their communications. The secure clock value can be used by programs running on the clients to validate time limitations placed on media licenses.

### Summary of the Invention

It is an object of the present invention to provide a method for handling a trusted clock value in an electronic equipment. Moreover,it is an object to transmit the trusted clock value between the electronic equipment and a time provider, wherein the transmission and the handling of the trusted prevents replay attacks and the provided trusted clock value is trusted by the electronic equipment.

The above object is achieved by a method for handling a trusted clock value in an electronic communication apparatus as defined in claim 1.

According to one aspect of the invention the steps of transmitting the current clock value, and receiving the trusted clock value occurs on a predetermined schedule. In another aspect of the invention the steps according to the invention occurs in a DRM (digital rights management) system.

I one embodiment the trusted clock value is received together with downloaded content or a rights certificate. Further, at least one key pair is utilized for providing the digital signatures.

In another embodiment of the invention the method comprises the further steps of: comparing the trusted clock value and a time restriction of content having time restricted rights; and providing access to the content if the trusted clock value is within said restriction.

According to another embodiment of the invention the step of transmitting the digital client signature comprises the further steps of: obtaining a current clock value of the secure clock mechanism; signing the current clock value of the secure clock mechanism using a private key of the electronic equipment; storing the signed current clock value in a memory of the electronic communication apparatus; the step of transmitting the digital client signature comprises the further step of transmitting the signed current clock value together with the current clock value to the trusted time provider; the step of receiving the trusted clock value and the digital server signature comprises the step of receiving a signed value of the trusted clock value, and a signed value of the current clock value, together with the trusted clock value; the step of verifying the trusted clock value comprises the steps of; verifying the signature of the received trusted and secure clock values, respectively, using the public key of the trusted time provider; comparing the stored signed current clock value and the received signed current clock value; and updating the secure clock mechanism with the received trusted clock value if the stored signed current clock value and the received signed current clock value match.

In still another embodiment of the above mentioned method according to the invention the step of transmitting the digital client signature comprises the further steps of: transmitting a set clock request to the trusted time provider; receiving a certificate holding the public key of the trusted time provider; generating a session key; encrypting the session key using the public key of the trusted time provider; obtaining a current clock value of the secure clock mechanism; generating a HMAC (hash based message authentication code) value based on the current clock value and the session key to provide the digital client signature; transmitting to the trusted time provider the value of the encrypted session key and the HMAC value; the step of receiving the trusted clock value and the digital server signature comprises the step of receiving a signed trusted clock value together with the trusted clock value; and the step of verifying the trusted clock value comprises the step of verifying the received signed trusted clock value using the session key.

In one embodiment of the above mentioned method the electronic equipment and the time provider are provided with symmetrical keys, and wherein the step of transmitting the digital client signature comprises the further steps of: obtaining a current clock value of the secure clock mechanism; signing the current clock value of the secure clock mechanism using a symmetric key of the electronic equipment; the step of receiving the trusted clock value and the digital server signature comprises the step of receiving a signed trusted clock value together with the trusted clock value; and the step of verifying the trusted clock value comprises the step of verifying the received signed trusted clock value using the symmetric key of the electronic equipment.

According to one aspect of the above mentioned method according to the invention the step of transmitting the verification of the updating of the secure clock mechanism comprises the steps of: signing the trusted clock value using a private key of the electronic communication apparatus; and transmitting the signed trusted clock value to a server.

According to still another aspect of the above mentioned method according to the invention, the step of transmitting the verification of the updating of the secure clock mechanism comprises the further steps of: incrementing the trusted clock value with a increment value; generating a HMAC value of the incremented trusted clock value using a session key or a symmetric key for providing the digital client signature; and transmitting the HMAC value to a server.

Also, according to some embodiments of the invention it is possible to substitute the current clock value mentioned above for a random number or a counter value.

Another object of the invention is to provide method for transmitting a trusted clock value to an electronic equipment. This object is achieved by a method defined in claim 13.

In one embodiment of the method for transmitting the trusted clock value the step of receiving the digital client signature comprises the step of receiving a current clock value of a secure clock mechanism of the electronic equipment (1, 2); and the step of transmitting the trusted clock value and the digital server signature comprises the further step of comparing the received current clock value of the secure clock mechanism (32, 42) of the electronic equipment (1, 2) and the trusted clock value of the trusted clock (52).

In another embodiment of the method for transmitting the trusted clock value the step of receiving the digital client signature comprises the step of verifying the signature of a current clock value utilizing at least one key pair.

In still another embodiment of the method for transmitting the trusted clock value the step of verifying the digital client signature comprises the further step of verifying the signature of the signed current clock value of the secure clock mechanism of the electronic equipment using a public key of the electronic equipment ; and the step of transmitting the trusted clock value and the digital server signature comprises the step of signing the trusted clock value and the current clock value using the private key of the trusted time provider, and transmitting to the electronic equipment the signed trusted clock value and the signed current clock value.

According to on embodiment of the method for transmitting the trusted clock value the step of receiving digital client signature comprises the further steps of: receiving a set clock request; transmitting to the electronic equipment a certificate holding the public key of the trusted time provider; receiving a session key; receiving a HMAC value of the current clock value of a secure clock mechanism of the electronic equipment; verifying the received HMAC value utilizing the session key; the step of transmitting the trusted clock value and the digital server signature comprises the steps of: generating a HMAC value of the trusted clock value using the session key to provide the digital server signature; and transmitting the HMAC value to the electronic equipment.

According to another embodiment of the method for transmitting the trusted clock value step of receiving a digital client signature comprises the further step of: receiving a HMAC value of the current clock value of a secure clock mechanism of the electronic equipment; verifying the HMAC value utilizing a symmetric key; the step of transmitting the trusted clock value and the digital server signature comprises the steps of: generating a HMAC value of the trusted clock value using the symmetric key to provide the digital server signature; and transmitting the HMAC value to the electronic equipment.

According to one aspect of the method for transmitting the trusted clock value the method comprises the further step of deciding whether the verification of the updating of the secure clock mechanism is valid. According to another aspect of said method the steps of receiving the current clock value, and transmitting the trusted clock value occurs on a predetermined schedule in a DRM system.

Another object of the invention is to provide an electronic equipment capable of handling a trusted clock value without intervention by the user of said equipment.

This object is achieved by an electronic equipment having a memory, a processor, communication means, and the memory containing program code for performing the steps of the method for handling a trusted clock value when executed by said processor. The electronic equipment comprises a secure clock mechanism.

In one embodiment of the electronic equipment said equipment is a computer. In another embodiment, said equipment is a pager, or a portable radio communication equipment. In still another embodiment the electronic communication equipment is a mobile telephone.

Still another object of the invention is to provide a trusted time provider capable of providing a trusted clock value.

This object is achieved by a server comprising a memory, a trusted clock, a processor, and communication means, the memory containing program code for performing the steps of the method for transmitting the trusted clock value when executed by said processor.

It is an advantage of the present invention that the secure and trusted clock values are authenticated to prevent replay attacks. Also, it is an advantage that the received trusted clock value can assure that a user of the equipment can not reset the secure clock of the user equipment to circumvent time restrictions placed on trusted components. The present invention may be utilized according to different known services wherein updating of the secure clock is preferred, such as DRM services. Also, the present invention may be utilized for making the GSM/UMTS NITZ service sufficiently secure for transmitting clock value for setting not only a user-defined clock, but also a secure clock of the electronic equipment.

Further preferred features of the invention are defined in the dependent claims.

It should be emphasized that the term "comprises/comprising" when used in this specification is taken to specify the presence of stated features, integers, steps, components or groups thereof.

### Brief Description of the Drawings

Embodiments and various other aspects of the present invention will now be described in more detail, reference being made to the accompanying drawings, in which:
Fig. 1 is a schematic overview of a system, wherein the method for handling a trusted clock value in the illustrated electronic equipment may be performed;
Fig. 2a is a block diagram showing exemplifying components of the mobile telephone shown in Fig. 1;
Fig. 2b is a block diagram showing exemplifying components of the computer shown in Fig. 1;
Fig. 2c is a block diagram showing components of the trusted time provider embodied as a server in Fig. 1;
Fig. 3 is a flow chart of a first embodiment of the method for handling the trusted clock value according to the invention;
Fig. 4 is a flow chart of a first embodiment for transmitting the trusted clock value according to the invention;
Fig. 5 is a flow chart of a second embodiment of the method for handling the trusted clock value according to the invention;
Fig. 6 is a flow chart of a second embodiment for transmitting the trusted clock value according to the invention;
Fig. 7 is a flow chart of a third embodiment of the method for handling the trusted clock value according to the invention;
Fig. 8 is a flow chart of a second embodiment for transmitting the trusted clock value according to the invention; and
Fig. 9 is an alternative embodiment for handling the trusted clock value according to the invention.

### Detailed Description of Embodiments

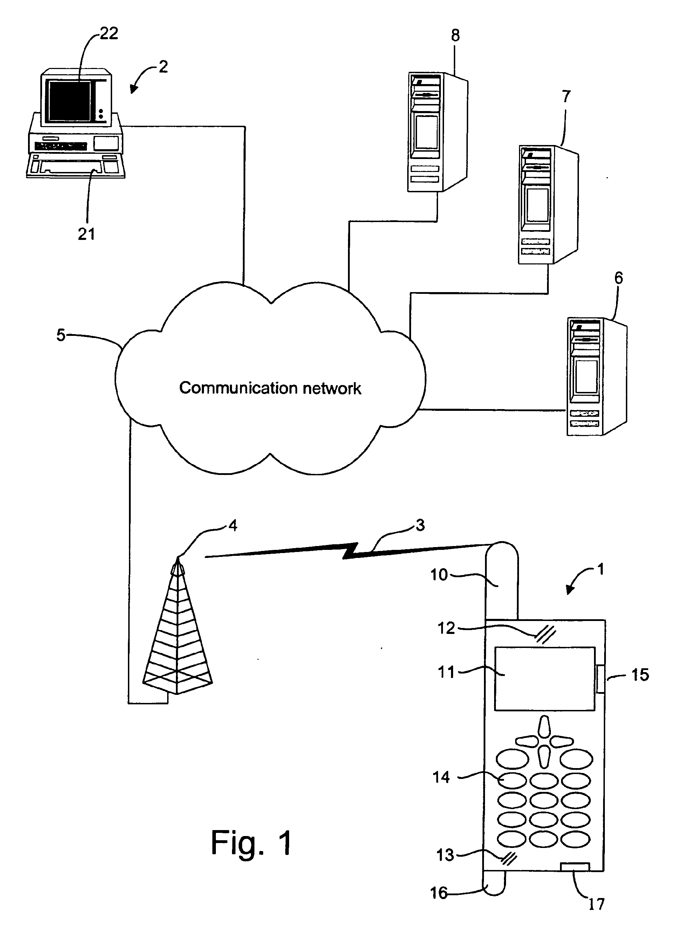

Fig. 1 is an illustration of a general example environment wherein the method for handling a trusted clock value is practiced. However, the man skilled in the art will appreciate that this is only for exemplifying purposes, and that the present invention may be implemented in other systems comprising electronic equipment not shown in Fig. 1, such as programmable consumer products, network PCs, minicomputers, portable radio communication equipment etc.

In Fig. 1 is a mobile telephone 1 and a PC computer 2 shown as two examples of electronic equipment comprising a secure clock, or which are adapted to handle a secure clock value according to the invention. The mobile telephone 1 is connected via a wireless connection 3 and a base station 4 to a communication network 5, such as the Internet, a mobile communication network, or any other wide area network. Similarly, the computer 2 is connected to the communication network 5, through e.g. a modem or broadband connection. Further, a first, second and third server 6, 7, 8, respectively, are connected to the communication network 5. The first server 6 is a trusted time provider, the second server 7 is a DRM server, and the third server 8 is a content server, as will be further explained in the following. As should be noticed, the first second and third servers 6, 7, 8, may equally be provided as a single server, or any other sources capable of providing a trusted clock value and digital services, in another embodiment. Also, the first server 6 may be part of system for a time service, such as a secure Internet time service or the NITZ service in GSM /UMTS telecommunication networks.

Further, the mobile telephone comprises an antenna 10 for communication with the base station 4. Communication means, such as a radio receiver chain and a radio transmitter chain (not shown), are connected to the antenna 10. For interacting with services provided by the content server 8, the mobile telephone 1 comprises a user interface comprising e.g. a display 11, a loudspeaker 12, a microphone 13, and a keypad 14. As is realized, other not shown auxiliary input devices, such as a game pad or a joystick may be connected to the mobile telephone 1 (or the computer) through an IR (Infra Red) port 15, a supplementary short range antenna 16 (e.g. Bluetooth antenna), or a cable connector interface 17, to which e.g. a serial cable may be connected.

The computer 2 comprises, but is not limited to, various input means known per se, such as a key board 21, a mouse, or any type of digital data input interface (modem, ISDN, TCP/IP-based information exchange etc.). Correspondingly, the computer 2 also comprises various output means known per se, such as a display 22 a printer or any type of digital data output interface (modem, ISDN, TCP/IP-based information exchange, etc.). The data input and output interfaces will serve as a communication means for communicating with the communication network 5.

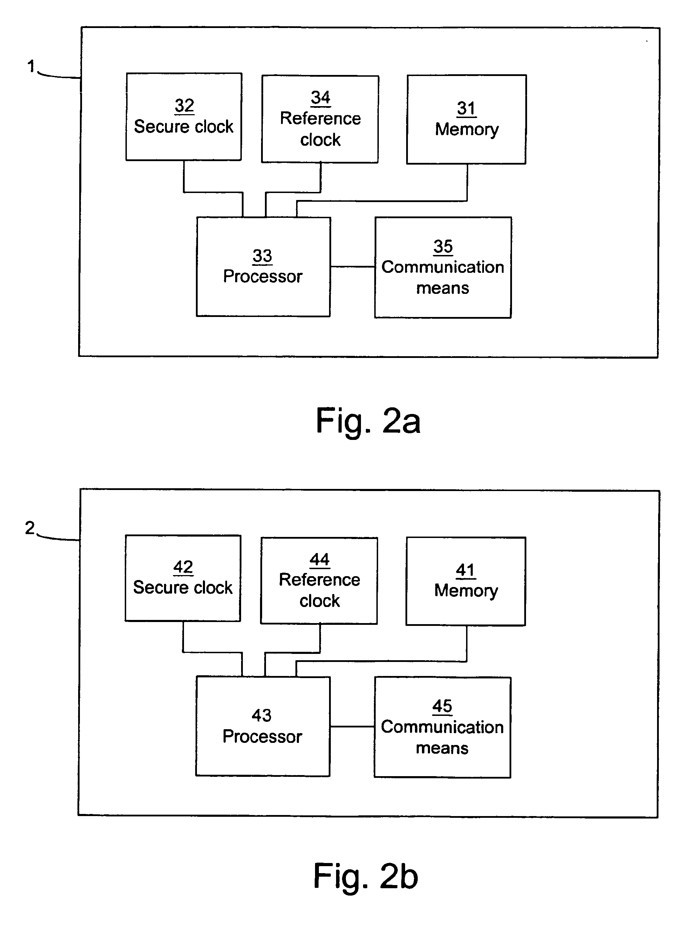

In Fig. 2a and 2b exemplary components of the mobile telephone 1 and the computer 2, respectively, are shown. The electronic equipment 1, 2 comprises a memory 31, 41 including a permanent memory, such as a ROM (Read Only Memory) memory and/or a hard disk (HD), and a working memory, such as a RAM (Random Access Memory) memory. The memory 31, 41 comprises digital instructions for setting or updating at least one secure clock mechanism 32, 42 of the electronic equipment 1, 2. The secure clock mechanism 32, 42 may be implemented with a module comprising a start time and an offset. The offset is incremented by a reference clock 34, 44, such as a timer, which is not modifiable and that may be common for several clocks including the one holding the user defined time. The start time may be preset by the manufacturer of the electronic equipment 1, 2, or provided by an external source, such as the trusted time provider 6. As should be noticed, a secure clock mechanism 32, 42 is not necessary in the electronic equipment 1, 2, which will be further discussed below in relation to one embodiment of the invention. Further, the electronic equipment comprises a processor 33, 43, which may be the CPU (Central Processing Unit) of the equipment 1, 2, capable of performing cryptographic functions, such as signing, encryption, decryption, and authentication. Also, the electronic equipment 1, 2 comprises a communication means 35, 45 having a digital data input and output interface, or a radio communication means, as described above.

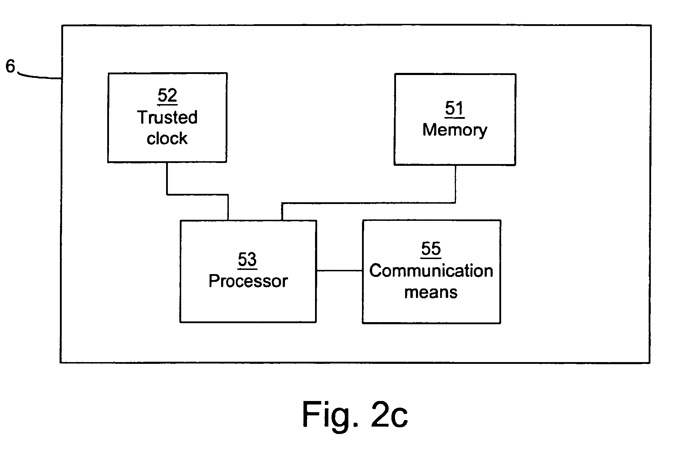

Fig. 2c illustrates components of the trusted time provider 6. The time provider 6 comprises a memory 51 comprising computer readable instructions for carrying out the steps according to the method of the invention, which are executed by a processor 52, such as the CPU of the trusted time provider 6. Also, the trusted time provider 6 comprises a trusted clock 53, according to which the secure clock 32, 42 of the electronic equipment 1, 2 may be updated. Also, the trusted time provider 6 comprises communication means 55, such as the digital data input and output interface, or radio communication means, as described above.

The electronic equipment 1, 2 may comprise several clocks 32, 42 for serving different downloaded content. If different content providers are requesting updating or downloading a trusted clock value from a specific time provider 6, trusted time values may be received from any number of time providers 6. According to the invention, any of the clocks 32, 42 of the electronic equipment 1, 2 may be updated or recalibrated against an external trusted clock 52, provided by the trusted time provider 6. In the following, reference will only be made to a single secure clock 32, 42. However, the invention may be adapted to virtually any number of secure or not secure clocks. In the embodiment shown in Fig. 1 the trusted time provider 6 is embodied as the first server 6. If several time providers 6 are utilized, each time provider can provide a server identifier identifying the specific time provider 6. The server identifier may be transmitted to the electronic equipment together with the trusted time value, wherein the electronic equipment is able to determine from which specific time provider 6 the trusted clock value is received. However, as should be noticed, the present invention may be practiced in virtually any other protocol or communication scheme, which specifies the updating or setting of a secure clock 32, 42, such as the DRM service or the NITZ service.

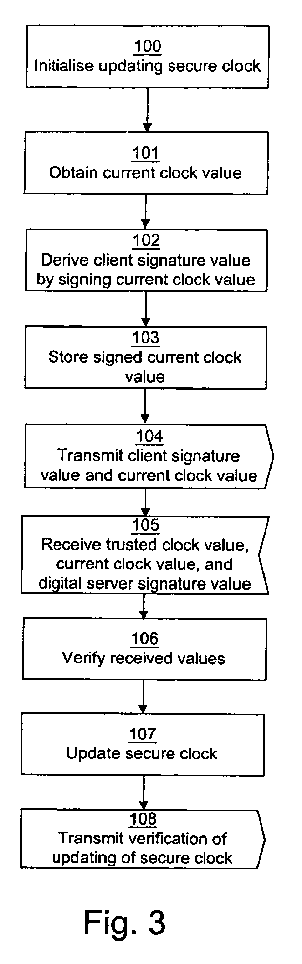

If a user of the mobile telephone 1 or the computer 2 intends to download DRM based content from the third content server 8 the user must first obtain a verification or certificate, which authorizes access to the content server 8. Therefore, the mobile telephone 1 or the computer 2 has to connect to the second (DRM) server 7, to obtain the certificate. However, before the certificate is provided, many DRM systems require that the secure clock of the electronic user equipment 1, 2 is set or updated against a trusted time provider 6 or source. Therefore, the mobile telephone 1, or the computer 2 connects to the trusted time provider 6 to update its secure clock mechanism 32, 42. Also, in an alternative embodiment a clock updating service, such as the NITZ service, can provide the trusted clock value to the electronic equipment 1, 2. If the clock updating service is utilized, it has to be modified according to the invention to incorporate the steps as described below with reference to Figs 3-6, wherein the protection of the clock values sent between the trusted clock provider 6 and the mobile telephone 1 is provided.

There are different reasons for updating or setting the secure clock 32, 42. One is that a timer should be set or reset to count e.g. 30 hours or 10 days from now on. The timer has to be set or reset by a secure source providing a trusted clock value in the form of a timer value. In another embodiment, the secure clock of the electronic equipment 1, 2 should be set or updated, to be trusted by e.g. a content provider, before any content can be downloaded. If the updating of the secure clock 33 is accepted, the electronic equipment 1, 2 is authenticated as respecting digital rights, i.e. trusted by the content provider.

Clock values as used in this specification means any value identifying the real time and/or date, the offset from a certain starting value, or a timer value. The offset may be incremented by any step, such as a second or a minute, and has to be determined in each specific case.

The memories 31, 41, 51 of the electronic equipment 1, 2 and the trusted time provider 6 are provided with a computer program comprising program code adapted to be read into the memories 31, 41, 51 and executed by the processors 33, 43, 53 so as to perform the steps according to the following exemplifying embodiments. As should be noted, the steps of the method according to the invention may be executed in different sequences then the ones described in relation to the exemplifying embodiments, which are only for illustrative purposes.

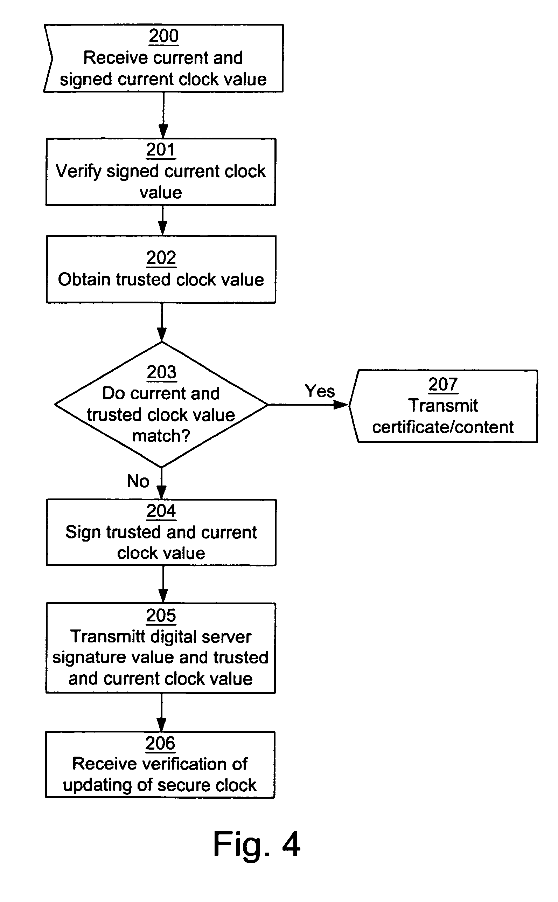

A first embodiment of the present invention will now be described with reference to Figs. 3 and 4. Any function or step executed by the electronic equipment 1, 2 for carrying out the method handling the trusted clock value according to the invention is described in relation to the flow chart of Fig. 3, and any corresponding function or step executed by the trusted time provider 6 for carrying out the method for transmitting the trusted clock value according to the invention is described by the flowchart of Fig. 4. The first embodiment is a PKI (Public Key Infrastructure) based scheme for updating the secure clock 32, 42. Therefore, both the electronic equipment 1, 2 and the trusted time provider 6 have a key pair. The key pair of the electronic equipment 1, 2 can be provided by the manufacturer of said equipment, or provided by a remote certification authority according to the IETF (Internet Engineering Task Force) X.509 standard.

In a first step 100 of Fig. 3 the electronic equipment 1, 2 will initialize the setting or updating of the secure clock 32, 42 by e.g. receiving a request for a verification of an updating of the secure clock from the DRM server 7 or the content server 8, wherein the method for handling the trusted clock value according to the invention will be initialized. However, other initializations are equally possible, such as a request from the user of the electronic equipment 1, 2 to set the user clock according to the secure clock 32, 42. Then, in a second step 101 the current clock value of the secure clock 32, 42 is obtained by the processor 33, 43. As should be noticed, obtaining the clock value may not be necessary in an alternative embodiment. In step 102, a digital client signature is obtained, which will be unique for each session for handling the trusted clock value. The digital client signature is utilized for preventing replay attacks. In one embodiment, the value of the digital client signature is provided by signing the current clock value using the private key of the electronic equipment 1, 2. The current clock value or and/or the signed current clock value is stored in the memory 31, 41 of the electronic equipment 1, 2 or in a register of the CPU 33, 43 in step 103 for use in a subsequent step. In step 104, the value of the digital client signature is transmitted to the trusted time provider 6. Also, the current clock value may be transmitted together with the digital client signature if said value is needed by the trusted time provider 6, as will be further disclosed below. By transmitting the unique digital client signature to the trusted time provider 6 authentication is provided and the current clock value can be protected against replay attacks and false base stations. However, the method according to the invention is not limited to the above procedure. The current clock value may e.g. be obtained in other steps than the one described above.

In a first step 200 of Fig. 4, the trusted time provider 6 receives the digital client signature together with the current clock value, if it is incorporated. In step 201, The trusted time provider 6 verifies the digital client signature by utilizing the public key of the user equipment 1, 2. Consequently, as the trusted time provider 6 may serve many electric equipment 1, 2 a record holding the public keys of the equipment 1, 2 must be provided in the second server 7, which e.g. can be implemented by any readable memory 51. Then, in step 202 the trusted time provider 6 obtains the value of the trusted clock 52, and in step 203 the current clock value is compared against the trusted clock value of the trusted time provider 6. If the values do not match, the procedure continuous. However, as should be noticed the match does not need to be exact, a small drift may be allowed. As is understood, if the current clock value is not transmitted in step 104, the comparing in step 203 does not have to be provided. If the trusted time provider 6 is provided together with the DRM server 7 and/or the content server 8, said servers 7, 8 may in step 207 chose to transmit a DRM certificate or any content to the user equipment 1, 2 indicating that the current clock value is accepted, if said values match. However, if the secure clock 32, 42 of the electronic equipment 1, 2 needs to be updated, the trusted time provider 6 in step 204 signs the trusted clock value and the current clock value received from the electronic equipment 1, 2 to provide a digital server signature value using the private key of the trusted time provider 6. Then, in step 205, the digital server signature value together with the trusted clock value and possibly the current clock value are transmitted to the electronic equipment 1, 2. Again, providing the digital server signature, such as the signed trusted clock value, provides authentication and prevents replay attacks. Other digital client signatures than the one disclosed above may equally be provided.

In step 105 of Fig. 3, the electronic equipment 1, 2 receives the trusted clock value, the current clock value and the digital server signature value. In step 106, the electronic equipment 1, 2, verifies the digital server signature by utilizing the public key of the trusted time provider 6. By comparing the current clock value stored in the memory 31, 41, or the register of the CPU 33, 43 of the equipment 1, 2, and the current clock value received from the trusted time provider 6, the equipment 1, 2 can determine which of several secure clocks to update in step 107. Also, if a server identifier is provided by the time provider 6 said identifier may be utilized for identifying which secure clock 32, 42 to update. Finally, in step 108 the electronic equipment 1, 2 can prepare a verification of the updating of the secure clock 32, 42 by signing the trusted clock value and send the result to the trusted time provider 6, the DRM server 7, or the content server 8.

In step 206 of Fig. 4, the trusted time provider 6, the DRM server 7, or the content server 8 can use the verification of the updated secure clock 32, 42 to verify that the secure clock 32, 42 of the electronic equipment 1, 2 is valid. If this step fails, said server 7, 8 can chose to not pass any time restricted certificate or content to the electronic equipment 1, 2. As should be noticed, if the purpose of the updating of the secure clock 32, 42 is to only set a new time without the intention of downloading any content, steps 108 and 206 above are not necessary.

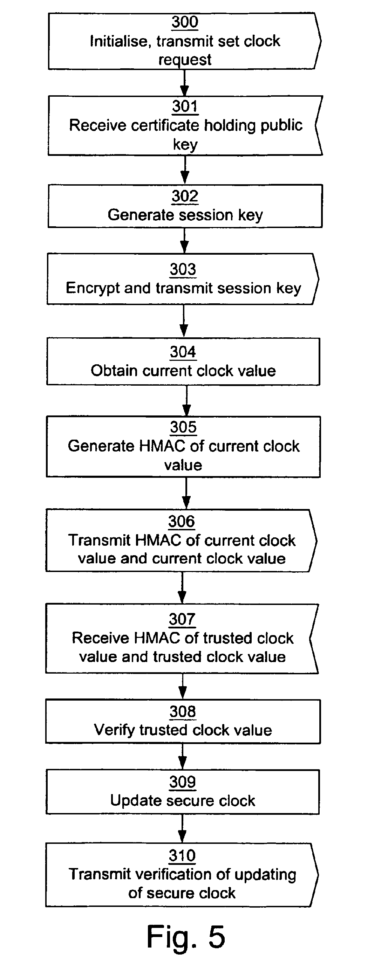

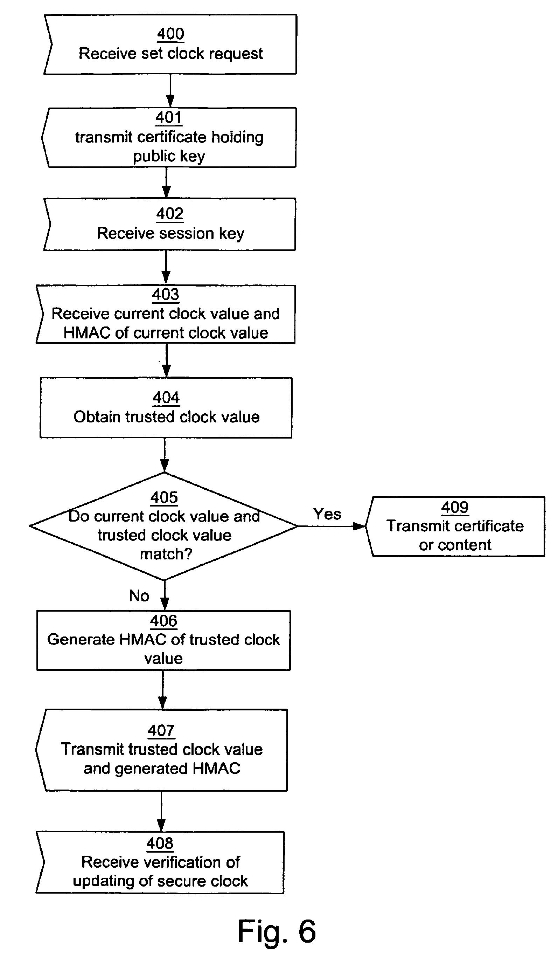

A second embodiment of the present invention will now be described in relation to Figs. 5 and 6. Any function or step executed by the electronic equipment 1, 2 for carrying out the method for handling the trusted clock value according to the invention is described in relation to the flow chart of Fig. 5, and any corresponding function or steps executed by the trusted time provider 6 for carrying out the method for transmitting the trusted clock value according to the invention is described by the flowchart of Fig. 6. In the second embodiment, only the trusted time provider 6 has a key pair. In a first step 300 of Fig. 5, the electronic equipment 1, 2 initialize the handling of the trusted clock value by transmitting a set clock request to the trusted time provider 6. Alternatively, a get content request or similar may be used as a request for receiving a trusted clock value and/or updating or setting the secure clock 32, 42 if an updating is required before any content can be downloaded.

In the first step 400 of Fig 6, the trusted time provider 6 receives the set clock request. In respons, the trusted time provider 6 obtains its certificate holding its public key, e.g. from the memory 51 of the trusted time provider 6. Then, in step 401 the trusted time provider 6 returns said certificate to the requesting electronic equipment 1, 2.

The electronic equipment 1, 2 receives the certificate in step 301. In response thereto, a session key, such as a random number, is generated and stored, e.g. in the memory 31, 41 or the register of the processor 33, 43 of the electronic equipment 1, 2. In step 303 the session key is encrypted using the public key of the trusted time provider 6, and then transmitted to said trusted time provider 6. By generating a new session key for each session, which is encrypted during transmission, replay attacks can be prevented. Alternatively, the encryption and transmission of the session key may be performed in a later step. In step 304, the current clock value is obtained from the secure clock 32, 42 of the electronic equipment 1, 2. The current clock value is then utilized in step 305 to generate a digital client signature, such as a HMAC value based on said clock value, using the session key generated in step 302. A hashing function, such as SHA-1 or MD5, can be utilized by the mobile telephone 1 for the integrity protection. A value of the HMAC parameter is computed using the hashing function and the generated session key. However, other hashing functions may also be used within the scope of the invention. The digital client signature together with the current clock value is in step 306 transmitted to the trusted time provider 6, wherein client authentication is provided. As should be noticed, also the session key may be transmitted in this step as an alternative to the transmission in step 303. Further, transmitting the current clock value is in an alternative embodiment not necessary if said value is not needed by the trusted time provider 6.

In step 402 of Fig. 6, the trusted time provider 6 receives and decrypts the session key, which may be temporarily stored in the memory 51. Then, in step 403 the current clock value of the electronic equipment 1, 2 is received together with the digital client signature. Alternatively, if the session key is transmitted together with the components received in step 403, step 402 and 403 may form one step. Then, the trusted time provider 6 in step 404 obtains the trusted clock value of the trusted clock 52. The trusted clock value may in step 405 be compared to the current clock value of the electronic equipment 1, 2 if the current clock value is provided. However, in an alternative embodiment, the comparing is not executed if the comparing is not necessary. If the clock values match, the trusted time provider 6 may in step 409 chose to transmit any DRM certificate or content if it also serves as the DRM server 7 and/or the content server 8. However, if they do not match the procedure continues in step 406. Further, the match between the current clock value and the trusted clock value does not need to be exact, a certain drift may be allowed. In step 406, a digital server signature is generated. The digital server signature is in one embodiment provided by signing the trusted clock value using the private key of the trusted time provider 6. In an alternative embodiment, generating a HMAC value based on the trusted clock value and the session key can provide the digital server signature. Then, in step 407, the digital server signature together with the trusted clock value is transmitted to the electronic equipment 1, 2. In an alternative embodiment, also a server identifier, such as an URL, is provided and transmitted in step 407.

The electronic equipment in step 307 receives the digital server signature together with the trusted clock value and possibly the server identifier. Then, in step 308 the digital server signature and the public key of the trusted time provider 6 is utilized for verifying the trusted clock value. By providing server authentication using the digital server signature, such as the signed trusted clock value, the trusted clock value from trusted time provider 6 can be trusted. If authentication is not provided, there is a threat that an unauthorized time provider or false base station tries to set the secure clock 32, 42 according to a wrong value, or even tries to remove the value of the secure clock 32, 42. If the trusted clock value is accepted, in step 309, the secure clock 32, 42 may be updated with said trusted clock value. Finally, if the updating is successful, the electronic equipment 1, 2 may in step 310 generate and transmit an verification of the updating of the secure clock mechanism 32, 42 to the trusted time provider 6, if required by the utilized communication scheme. However, this step is not necessary for each embodiment of the invention. The updating verification is a HMAC value of the trusted clock value computed as described above, which now corresponds to the updated new current clock value of the secure clock 32, 42 of the electronic equipment 1, 2. However, the HMAC generated in step 310 will correspond to the HMAC generated in step 406 if they are based on the same clock value and the same private key. Therefore, one of said value or key has to be altered when generating the HMAC value in step 310 to prevent replay attacks. In one embodiment, the clock value is altered by e.g. incrementing said value with a certain known increment value, such as one second. As the time provider knows the increment value, the generated HMAC value may be verified at the time provider 6.

If the updating verification is transmitted in step 310, the trusted time provider 6 receives the verification in step 408. Also, if the trusted time provider 6 also serves as the DRM provider 7 and/or the content provider 8, a certificate and/or content may be transmitted if the updating verification is valid. However, the final step 408 of Fig. 6 is not necessary in all embodiments of the invention.

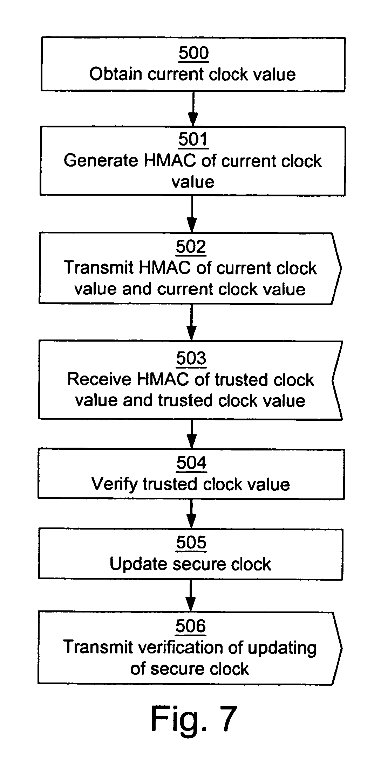

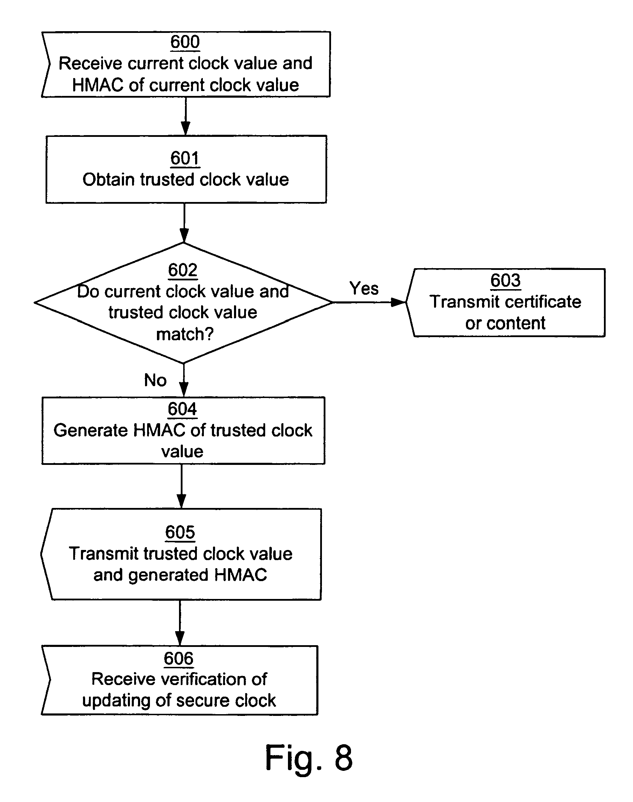

A third embodiment will now be described in relation to Figs. 7 and 8. Any function or step executed by the electronic equipment 1, 2 for carrying out the method for handling the trusted clock value according to the invention is described in relation to the flow chart of Fig. 7, and any corresponding function or steps executed by the trusted time provider 6 for carrying out the method for transmitting the trusted clock value according to the invention is described by the flowchart of Fig. 8. In the third embodiment a symmetric key pair is utilized. The symmetric key at the electronic equipment 1, 2 may be provided by the manufacturer of said equipment or by an operator at any later stage.

In a first step 500, the current clock value is obtained from the secure clock 32, 42 of the electronic equipment 1, 2. The current clock value is then utilized in step 501 to generate a digital client signature, such as a HMAC value based on e.g. said clock value or a random number, using the symmetric key of the electronic equipment 1, 2. A hashing function, such as SHA-1 or MD5, can be utilized by the mobile telephone 1 for the integrity protection. A value of the HMAC parameter is computed using the hashing function and the symmetric key. However, other hashing functions may also be used within the scope of the invention. The digital client signature together with the current clock value is in step 502 transmitted to the trusted time provider 6, wherein client authentication is provided. Further, transmitting the current clock value is in an alternative embodiment not necessary if said value is not needed by the trusted time provider 6.

In step 600 of Fig. 8 the time provider 6 receives the current clock value of the electronic equipment 1, 2 together with the digital client signature. Then, the trusted time provider 6 in step 601 obtains the trusted clock value of the trusted clock 52. The trusted clock value may in step 602 be compared to the current clock value of the electronic equipment 1, 2 if the current clock value is provided. However, in an alternative embodiment, the comparing is not executed if the comparing is not necessary. If the clock values match, the trusted time provider 6 may in step 603 chose to transmit any DRM certificate or content if it also serves as the DRM server 7 and/or the content server 8. However, if they do not match the procedure continues in step 604. Further, the match between the current clock value and the trusted clock value does not need to be exact, a certain drift may be allowed. In step 604, a digital server signature is generated. The digital server signature is in one embodiment provided by signing the trusted clock value using the symmetric key of the trusted time provider 6. In an alternative embodiment, generating a HMAC value based on the trusted clock value and the symmetric key of the time provider 6 can provide the digital server signature. Then, in step 605, the digital server signature together with the trusted clock value is transmitted to the electronic equipment 1, 2. In an alternative embodiment, also a server identifier, such as an URL, is provided and transmitted in step 605.

The electronic equipment in step 503 receives the digital server signature together with the trusted clock value and possibly the server identifier. Then, in step 504 the digital server signature and the symmetric key of the trusted electronic equipment 1, 2 is utilized for verifying the trusted clock value. By providing server authentication using the digital server signature, such as the signed trusted clock value, the clock value from the trusted time provider 6 can be trusted. If authentication is not provided, there is a threat that an unauthorized time provider or false base station tries to set the secure clock 32, 42 according to a wrong value, or even tries to remove the value of the secure clock 32, 42. If the trusted clock value is accepted, in step 505, the secure clock 32, 42 may be updated with said trusted clock value. Finally, if the updating is successful, the electronic equipment 1, 2 may in step 506 generate and transmit an verification of the updating of the secure clock mechanism 32, 42 to the trusted time provider 6, if required by the utilized communication scheme. However, this step is not necessary for each embodiment of the invention. The updating verification is a HMAC value of the trusted clock value computed as described above, which now corresponds to the updated new current clock value of the secure clock 32, 42 of the electronic equipment 1, 2. However, the HMAC generated in step 506 will correspond to the HMAC generated in step 604 if they are based on the same clock value and the same symmetric key. Therefore, one of said value or key has to be altered when generating the HMAC value in step 506 to prevent replay attacks. In one embodiment, the clock value is altered by e.g. incrementing said value with a certain known increment value, such as one second. As the time provider knows the increment value, the generated HMAC value may be verified at the time provider 6.

If the updating verification is transmitted in step 506, the trusted time provider 6 receives the verification in step 606. Also, if the trusted time provider 6 also serves as the DRM provider 7 and/or the content provider 8, a certificate and/or content may be transmitted if the updating verification is valid. However, the final step 606 of Fig. 6 is not necessary in all embodiments of the invention.

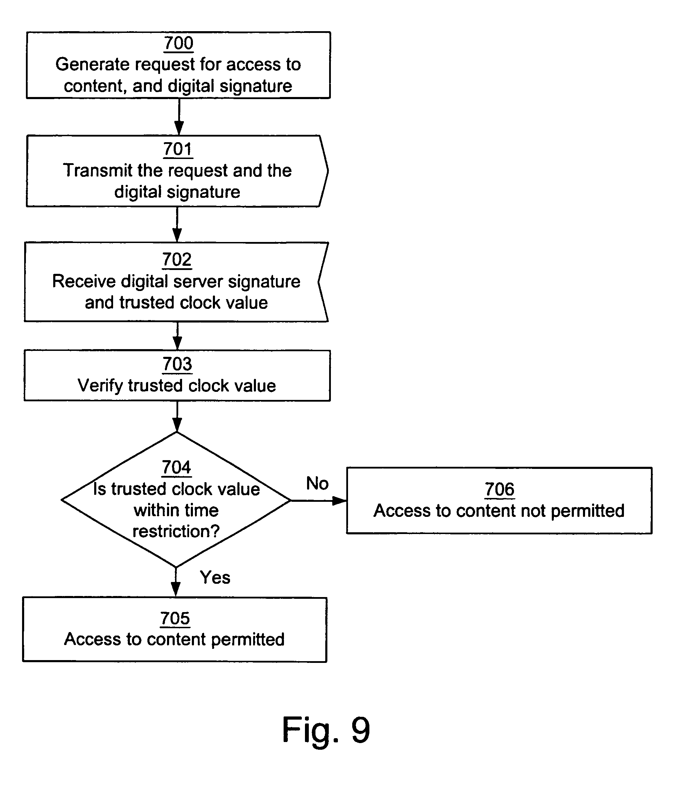

In an alternative embodiment disclosed in Fig. 9, it is not necessary to provide a secure clock mechanism in the electronic equipment 1, 2, as indicated above. By verifying rights restricted content each time the user of the electronic equipment 1, 2 requests access to the content a secure clock is unnecessary. In a first step 700 a request for a trusted clock value is generated e.g. when access to the content having restricted rights is requested by the user of the electronic equipment 1, 2. Also, a digital client signature is generated according to any of the above procedures, wherein the clock value is substituted for a counter value or a random number. In step 701 the request for a trusted clock value is transmitted to the trusted clock provider, wherein a digital server signature of the electronic equipment is provided with the request. The request is handled by the trusted time provider 6 according to e.g. any of the previously embodiments illustrated in Fig. 4, 6 and 8. In step 702 a trusted clock value is received according to any of the above embodiments together with a digital server signature at each time access to the content is requested. The received trusted clock value is verified in step 703 according to the previously described embodiments. Then, in step 704 the trusted clock value is compared to e.g. a time restriction of the previously downloaded content. If the trusted clock value is within the time restriction of the content access is permitted in step 705. Otherwise, if the trusted clock value is not within the restriction of the content access is not permitted in step 706. As no secure clock is available in this embodiment, the secure clock value of the previously described embodiments may be substituted for a random number or a counter value, e.g. in step 701 for generating the digital sever signature, wherein a random number generator or counter is provided in the electronic equipment 1, 2 by e.g. the processor 33, 43. The handling of the trusted clock value can be provided according to the above embodiments with the difference that the comparing between the restriction of the content and the trusted clock value is provided in step 704 instead of the updating of the secure clock.

In the above-disclosed embodiments the digital client signature and the digital sever signature should be unique in each updating session. This is according to one embodiment achieved in that signing the current clock value of the secure clock mechanism 32, 42 and signing the trusted clock value of the trusted clock 52 using a key pair of the electronic equipment 1, 2 and the trusted time provider provides the signed client and server signature, respectively. In another embodiment, only one key pair is utilized. The unique client signature is provided by generating the HMAC value of the obtained current clock value of the secure clock mechanism 32, 42 utilizing the session key. Signing the trusted clock value using the private key of the key pair of the trusted time provider 6 provides the unique digital server signature. Alternatively, symmetrical keys can be provided in stead of the one key pair of the time provider 6, wherein transmitting the public key to the electronic equipment 1, 2 is not necessary.

The present invention has been described to some alternative embodiments. However, the present invention is not limited to the steps as described above. Some of the functions described in a certain step may equally be provided in other steps, which are adapted to known and future protocols. All messages sent between the electronic equipment 1, 2 and a server, such as the trusted time provider 6, may be transmitted together with other messages sent between the equipment and the server. The present invention is best defined by the following independent claims.

## Claims

1. A method for handling a trusted clock value in an electronic communication apparatus (1, 2), comprising
transmitting a digital client signature being unique for each transmission to a trusted time provider (6);
receiving a trusted clock value from the trusted time provider (6), and a digital server signature being unique for each transmission;
verifying the trusted clock value; **characterized by** the steps of:
updating a secure clock mechanism (32, 42) of the electronic communication apparatus (1, 2); and
transmitting a verification of the updating of the secure clock mechanism (32, 42) to a server (6, 7, 8).

2. The method according to claim 1, wherein the step of transmitting a digital client signature comprises transmitting a current clock value, and wherein the steps of transmitting the current clock value, and receiving the trusted clock value occurs on a predetermined schedule.

3. The method according to claim 1, wherein the steps occurs in a DRM (digital rights management) system.

4. The method according to claim 3, wherein the trusted clock value is received together with downloaded content or a rights certificate.

5. The method according to claim 1, wherein at least one key pair is utilized for providing the digital signatures.

6. The method according to any of the claims 2-4, wherein the method comprises the further steps of:
comparing the trusted clock value and a time restriction of content having time restricted rights; and
providing access to the content if the trusted clock value is within said restriction.

7. The method according to claim 5, wherein the step of transmitting the digital client signature comprises the further steps of:
obtaining a current clock value of the secure clock mechanism (32, 42);
signing the current clock value of the secure clock mechanism (32, 42) using a private key of the electronic communication apparatus (1, 2);
storing the signed current clock value in a memory (31, 41) of the electronic communication apparatus (1, 2);
transmitting the signed current clock value together with the current clock value to the trusted time provider (6);
the step of receiving the trusted clock value and the digital server signature comprises the step of receiving a signed value of the trusted clock value, and a signed value of the current clock value, together with the trusted clock value;
the step of verifying the trusted clock value comprises the steps of;
verifying the signature of the received trusted and current clock values, respectively, using the public key of the trusted time provider (6);
comparing the stored signed current clock value and the received signed current clock value; and
updating the secure clock mechanism (32, 42) with the received trusted clock value if the stored signed current clock value and the received signed current clock value match.

8. The method according to claim 5, wherein the step of transmitting the digital client signature comprises the further steps of:
transmitting a set clock request to the trusted time provider (6) ;
receiving a certificate holding the public key of the trusted time provider (6);
generating a session key;
encrypting the session key using the public key of the trusted time provider (6);
obtaining a current clock value of the secure clock mechanism (32, 42);
generating a HMAC value based on the current clock value and the session key to provide the digital client signature;
transmitting to the trusted time provider (6) the value of the encrypted session key and the HMAC value;
the step of receiving the trusted clock value and the digital server signature comprises the step of receiving a signed trusted clock value together with the trusted clock value; and
the step of verifying the trusted clock value comprises the step of verifying the received signed trusted clock value using the session key.

9. The method according to claim 5, wherein the electronic communication apparatus (1, 2) and the time provider (6) are provided with symmetrical keys, and wherein the step of transmitting the digital client signature comprises the further steps of :
obtaining a current clock value of the secure clock mechanism (32, 42);
signing the current clock value of the secure clock mechanism (32, 42) using a symmetric key of the electronic communication apparatus(1, 2);
the step of receiving the trusted clock value and the digital server signature comprises the step of receiving a signed trusted clock value together with the trusted clock value; and
the step of verifying the trusted clock value comprises the step of verifying the received signed trusted clock value using the symmetric key of the electronic communication apparatus (1, 2).

10. The method according to any of the claims 2-5, wherein the step of transmitting the verification of the updating of the secure clock mechanism (32, 42) comprises the steps of:
signing the trusted clock value using a private key of the electronic communication apparatus (1, 2); and
transmitting the signed trusted clock value to a server (6, 7, 8) .

11. The method according to any of the claims 2-5, wherein the step of transmitting the verification of the updating of the secure clock mechanism (32, 42) comprises the further steps of:
incrementing the trusted clock value with a increment value;
generating a HMAC value of the incremented trusted clock value using a session key or a symmetric key for providing the digital client signature; and
transmitting the HMAC value to a server (6, 7, 8).

12. The method according to any of the claims 2-4,7,10-11-, wherein the current clock value is obtained by providing a random number or a counter value.

13. A method for transmitting a trusted clock value from a trusted time provider (6) to an electronic communication apparatus (1, 2), comprising:receiving a digital client signature being unique for each updating session;
obtaining a trusted clock value from a trusted clock (52);
transmitting the trusted clock value and a digital server signature being unique for each updating session to the electronic communication apparatus (1, 2); **characterized by** the step of:
receiving a verification of the updating of a secure clock mechanism (32, 42) of the electronic communication apparatus (1, 2).

14. The method according to claim 13, wherein the step of receiving the digital client signature comprises the step of receiving a current clock value of a secure clock mechanism of the electronic communication apparatus (1, 2); and
the step of transmitting the trusted clock value and the digital server signature comprises the further step of comparing the received current clock value of the secure clock mechanism (32, 42) of the electronic communication apparatus (1, 2) and the trusted clock value of the trusted clock (52).

15. The method according to claim 13, wherein the step of receiving the digital client signature comprises the step of verifying the signature of a current clock value utilizing at least one key pair.

16. The method according to claim 15, wherein the step of verifying the digital client signature comprises the further step of verifying the signature of the signed current clock value of the secure clock mechanism (32, 42) of the electronic communication apparatus (1, 2) using a public key of the electronic communication apparatus (1, 2); and
the step of transmitting the trusted clock value and the digital server signature comprises the step of signing the trusted clock value and the current clock value using the private key of the trusted time provider (6), and transmitting to the electronic communication apparatus (1, 2) the signed trusted clock value and the signed current clock value.

17. The method according to claim 15, wherein the step of receiving a digital client signature comprises the further steps of:
receiving a set clock request;
transmitting to the electronic communication apparatus (1, 2) a certificate holding the public key of the trusted time provider (6);
receiving a session key;
receiving a HMAC value of the current clock value of the secure clock mechanism (32, 42) of the electronic the communication apparatus (1, 2);
verifying the received HMAC value utilizing the session key;
the step of transmitting the trusted clock value and the digital server signature comprises the steps of:
generating a HMAC value of the trusted clock value using the session key to provide the digital server signature; and
transmitting the HMAC value to the electronic communication apparatus (1, 2).

18. The method according to claim 15, wherein the step of receiving a digital client signature comprises the further step of:
receiving a HMAC value of the current clock value of the secure clock mechanism (32, 42) of the electronic communication apparatus (1, 2);
verifying the HMAC value utilizing a symmetric key;
the step of transmitting the trusted clock value and the digital server signature comprises the steps of:
generating a HMAC value of the trusted clock value using the symmetric key to provide the digital server signature; and
transmitting the HMAC value to the electronic communication apparatus (1, 2).

19. The method according to claim 13, wherein the method comprises the further step of deciding whether the verification of the updating of the secure clock mechanism is valid.

20. The method according to claim 13, wherein the steps of receiving the current clock value, and transmitting the trusted clock value occurs on a predetermined schedule in a DRM system.

21. An electronic communication apparatus having a memory (31, 41), a processor (33, 43), communication means (35, 45), and the memory containing program code for performing the steps of any of the claims 1-13 when executed by said processor (33, 43),
wherein said communication apparatus comprises a secure clock mechanism (32, 42)

22. The electronic communication apparatus according to claim 21, wherein said communication apparatus is a computer (2).

23. The electronic communication apparatus according to claim 21, wherein said communication apparatus is a pager, or a portable radio communication equipment.

24. The electronic communication apparatus according to claim 21, wherein said communication apparatus is a mobile telephone (1).

25. A server comprising a memory (51), a trusted clock (52), a processor (53), and communication means (55), the memory containing program code for performing the steps of any of the claims 13-20 when executed by said processor (55).

## Patentansprüche

1. Verfahren zur Verarbeitung eines vertrauenswürdigen Uhrzeitwerts in einem elektronischen Kommunikationsgerät (1, 2), welches aufweist
Übertragung einer jeder Übertragung eindeutig zugeordneten digitalen Client-Signatur an eine vertrauenswürdige Uhrzeitquelle (6);
Empfang eines vertrauenswürdigen Uhrzeitwerts von der vertrauenswürdigen Uhrzeitquelle (6) sowie einer jeder Übertragung eindeutig zugeordneten digitalen Server-Signatur;
Verifizierung des vertrauenswürdigen Uhrzeitwerts; **gekennzeichnet durch** die Schritte:
Aktualisierung eines sicheren Uhrmechanismus (32, 42) des elektronischen Kommunikationsgeräts (1, 2); und
Übertragung einer Verifizierung der Aktualisierung des sicheren Uhrmechanismus (32, 42) an einen Server (6, 7, 8):

2. Verfahren nach Anspruch 1, wobei der Schritt der Übertragung einer digitalen Client-Signatur die Übertragung eines momentanen Uhrzeitwerts enthält, und wobei die Schritte der Übertragung eines momentanen Uhrzeitwerts und des Empfangs des vertrauenswürdigen Uhrzeitwerts gemäß einem vorgegebenen Zeitplan erfolgen.

3. Verfahren nach Anspruch 1, wobei die Schritte in einem DRM-(Digital Rights Management (Digitales Management von Rechten))-System erfolgen.

4. Verfahren nach Anspruch 3, wobei der vertrauenswürdige Uhrzeitwert zusammen mit einem herunter geladenen Inhalt oder einem Rechtezertifikat empfangen wird.

5. Verfahren nach Anspruch 1, wobei mindestens ein Schlüsselpaar zur Erstellung der digitalen Signaturen verwendet wird.

6. Verfahren nach einem der Ansprüche 2 bis 4, wobei das Verfahren folgende weitere Schritte aufweist:
Vergleich des vertrauenswürdigen Uhrzeitwerts mit einem Zeitrahmen eines Inhalts mit zeitlich beschränkten Rechten; und
Gewährung des Zugriffs auf den Inhalt, wenn der vertrauenswürdige Uhrzeitwert innerhalb des Zeitrahmens liegt.

7. Verfahren nach Anspruch 5, wobei der Schritt der Übertragung der digitalen Client-Signatur folgende weitere Schritte aufweist:
Erhalt eines momentanen Uhrzeitwerts des sicheren Uhrmechanismus (32, 42);
Signieren des momentanen Uhrzeitwerts des sicheren Uhrmechanismus (32, 42) mittels eines privaten Schlüssels des elektronischen Kommunikationsgeräts (1,2);
Speichern des signierten momentanen Uhrzeitwerts in einem Speicher (31, 41) des elektronischen Kommunikationsgeräts (1, 2);
Übertragen des signierten momentanen Uhrzeitwerts zusammen mit dem momentanen Uhrzeitwert an die vertrauenswürdige Uhrzeitquelle (6);
der Schritt des Empfangs des vertrauenswürdigen Uhrzeitwerts und der digitalen Server-Signatur enthält den Schritt des Empfangs eines signierten Werts des vertrauenswürdigen Uhrzeitwerts und eines signierten Werts des momentanen Uhrzeitwerts zusammen mit dem vertrauenswürdigen Uhrzeitwert;
der Schritt der Verifizierung des vertrauenswürdigen Uhrzeitwerts enthält folgende Schritte:
Verifizierung der Signatur des empfangenen vertrauenswürdigen bzw. momentanen Uhrzeitwerts mittels des öffentlichen Schlüssels der vertrauenswürdigen Uhrzeitquelle (6);
Vergleich des gespeicherten signierten momentanen Uhrzeitwerts mit dem empfangenen signierten momentanen Uhrzeitwert; und
Aktualisierung des sicheren Uhrmechanismus (32, 42) mit dem empfangenen vertrauenswürdigen Uhrzeitwert, wenn der gespeicherte signierte momentane Uhrzeitwert und der empfangene signierte momentane Uhrzeitwert übereinstimmen.

8. Verfahren nach Anspruch 5, wobei der Schritt der Übertragung der digitalen Client-Signatur folgende weitere Schritte aufweist:
Übertragung einer Uhreinstellanforderung an die vertrauenswürdige Uhrzeitquelle (6);
Empfang eines Zertifikats mit dem öffentlichen Schlüssel der vertrauenswürdigen Uhrzeitquelle (6);
Erzeugung eines Sitzungsschlüssels;
Verschlüsselung des Sitzungsschlüssels mittels des öffentlichen Schlüssels der vertrauenswürdigen Uhrzeitquelle (6);
Erhalt eines momentanen Uhrzeitwerts des sicheren Uhrmechanismus (32, 42);
Erzeugung eines HMAC-Werts anhand des momentanen Uhrzeitwerts und des Sitzungsschlüssels zur Erstellung der digitalen Client-Signatur;
Übertragung des Werts des verschlüsselten Sitzungsschlüssels und des HMAC-Werts an die vertrauenswürdige Uhrzeitquelle (6); wobei
der Schritt des Empfangs des vertrauenswürdigen Uhrzeitwerts und der digitalen Server-Signatur den Schritt des Empfangs eines signierten vertrauenswürdigen Uhrzeitwerts zusammen mit dem vertrauenswürdigen Uhrzeitwert enthält; und
der Schritt der Verifizierung des vertrauenswürdigen Uhrzeitwerts den Schritt der Verifizierung des empfangenen signierten vertrauenswürdigen Uhrzeitwerts mittels des Sitzungsschlüssels enthält.

9. Verfahren nach Anspruch 5, wobei das elektronische Kommunikationsgerät (1,2) und die Uhrzeitquelle (6) symmetrische Schlüssel erhalten, und wobei der Schritt der Übertragung der digitalen Client-Signatur folgende weitere Schritte aufweist:
Erhalt eines momentanen Uhrzeitwerts des sicheren Uhrmechanismus (32, 42);
Signieren des momentanen Uhrzeitwerts des sicheren Uhrmechanismus (32, 42) mittels eines symmetrischen Schlüssels des elektronischen Kommunikationsgeräts (1, 2); wobei
der Schritt des Empfangs des vertrauenswürdigen Uhrzeitwerts und der digitalen Server-Signatur enthält den Schritt des Empfangs eines signierten vertrauenswürdigen Uhrzeitwerts zusammen mit dem vertrauenswürdigen Uhrzeitwert enthält; und
der Schritt der Verifizierung des vertrauenswürdigen Uhrzeitwerts den Schritt der Verifizierung des empfangenen signierten vertrauenswürdigen Uhrzeitwerts mittels des symmetrischen Schlüssels des elektronischen Kommunikationsgeräts (1, 2) enthält;

10. Verfahren nach einem der Ansprüche 2 bis 5, wobei der Schritt der Übertragung der Verifizierung der Aktualisierung des sicheren Uhrmechanismus (32, 42) folgende Schritte aufweist:
Signieren des vertrauenswürdigen Uhrzeitwerts mittels eines privaten Schlüssels des elektronischen Kommunikationsgeräts (1, 2); und
Übertragung des signierten vertrauenswürdigen Uhrzeitwerts an einen Server (6, 7, 8).

11. Verfahren nach einem der Ansprüche 2 bis 5, wobei der Schritt der Verifizierung der Aktualisierung des sicheren Uhrmechanismus (32, 42) folgende weitere Schritte aufweist:
Erhöhung des vertrauenswürdigen Uhrzeitwerts um einen Erhöhungswert;
Erzeugung eines HMAC-Werts des erhöhten vertrauenswürdigen Uhrzeitwerts mittels eines Sitzungsschlüssels oder eines symmetrischen Schlüssels zur Erstellung der digitalen Client-Signatur; und
Übertragung des HMAC-Werts an einen Server (6, 7, 8).

12. Verfahren nach einem der Ansprüche 2 bis 4, 7, 10, 11, wobei der momentane Uhrzeitwert durch Bereitstellung einer Zufallszahl oder eines Zählerwerts erhalten wird.

13. Verfahren zur Übertragung eines vertrauenswürdigen Uhrzeitwerts von einer vertrauenswürdigen Uhrzeitquelle (6) an ein elektronisches Kommunikationsgerät (1, 2), welches aufweist:
Empfang einer digitalen Client-Signatur, die jeder Aktualisierungssitzung eindeutig zugeordnet ist;
Erhalt eines vertrauenswürdigen Uhrzeitwerts von einer vertrauenswürdigen Uhr (52);
Übertragung des vertrauenswürdigen Uhrzeitwerts und einer jeder Aktualisierungssitzung eindeutig zugeordneten digitalen Server-Signatur an das elektronische Kommunikationsgerät (1, 2); **gekennzeichnet durch** folgenden Schritt:
Empfang einer Verifizierung der Aktualisierung eines sicheren Uhrmechanismus (32, 42) des elektronisches Kommunikationsgeräts (1, 2).

14. Verfahren nach Anspruch 13, wobei der Schritt des Empfangs der digitalen Client-Signatur den Schritt des Empfangs eines momentanen Uhrzeitwerts eines sicheren Uhrmechanismus (32, 42) des elektronischen Kommunikationsgeräts (1, 2) enthält; und
der Schritt der Übertragung des vertrauenswürdigen Uhrzeitwerts und der digitalen Server-Signatur den weiteren Schritt des Vergleichs des empfangenen momentanen Uhrzeitwerts des sicheren Uhrmechanismus (32, 42) des elektronischen Kommunikationsgeräts (1,2) mit dem vertrauenswürdigen Uhrzeitwert der vertrauenswürdigen Uhr (52) enthält.

15. Verfahren nach Anspruch 13, wobei der Schritt des Empfangs der digitalen Client-Signatur den Schritt der Verifizierung der Signatur eines momentanen Uhrzeitwerts mittels mindestens eines Schlüsselpaars enthält.

16. Verfahren nach Anspruch 15, wobei der Schritt der Verifizierung der digitalen Client-Signatur den weiteren Schritt der Verifizierung der Signatur des signierten momentanen Uhrzeitwerts des sicheren Uhrmechanismus (32, 42) des elektronischen Kommunikationsgeräts (1, 2) mittels eines öffentlichen Schlüssels des elektronischen Kommunikationsgeräts (1, 2) aufweist; und
der Schritt der Übertragung des vertrauenswürdigen Uhrzeitwerts und der digitalen Server-Signatur den Schritt des Signierens des vertrauenswürdigen Uhrzeitwerts und des momentanen Uhrzeitwerts mittels des privaten Schlüssels der vertrauenswürdigen Uhrzeitquelle (6) und der Übertragung des signierten vertrauenswürdigen Uhrzeitwerts und des signierten momentanen Uhrzeitwerts an das elektronische Kommunikationsgerät (1, 2) aufweist,.

17. Verfahren nach Anspruch 15, wobei der Schritt des Empfangs einer digitalen Client-Signatur folgende weitere Schritte aufweist:
Empfang einer Uhreinstellanforderung;
Übertragung eines Zertifikats mit dem öffentlichen Schlüssel der vertrauenswürdigen Uhrzeitquelle (6) an das elektronische Kommunikationsgerät (1, 2);
Empfang eines Sitzungsschlüssels;
Empfang eines HMAC-Werts des momentanen Uhrzeitwerts des sicheren Uhrmechanismus (32, 42) des elektronischen Kommunikationsgeräts (1,2);
Verifizierung des empfangenen HMAC-Werts mittels des Sitzungsschlüssels; wobei
der Schritt der Übertragung des vertrauenswürdigen Uhrzeitwerts und der digitalen Server-Signatur folgende Schritte aufweist:
Erzeugung eines HMAC-Werts des vertrauenswürdigen Uhrzeitwerts mittels des Sitzungsschlüssels zur Erstellung der digitalen Server-Signatur; und
Übertragung des HMAC-Werts an das elektronische Kommunikationsgerät (1,2);

18. Verfahren nach Anspruch 15, wobei der Schritt des Empfangs einer digitalen Client-Signatur folgende weitere Schritte aufweist:
Empfang eines HMAC-Werts des momentanen Uhrzeitwerts des sicheren Uhrmechanismus (32, 42) des elektronischen Kommunikationsgeräts (1,2);
Verifizierung des HMAC-Werts mittels eines symmetrischen Schlüssels; wobei
der Schritt der Übertragung des vertrauenswürdigen Uhrzeitwerts und der digitalen Server-Signatur folgende Schritte aufweist:
Erzeugung eines HMAC-Werts des vertrauenswürdigen Uhrzeitwerts mittels des symmetrischen Schlüssels zur Erstellung der digitalen Server-Signatur; und
Übertragung des HMAC-Werts an das elektronische Kommunikationsgerät (1,2).

19. Verfahren nach Anspruch 13, welches den weiteren Schritt der Feststellung aufweist, ob die Verifizierung der Aktualisierung des sicheren Uhrmechanismus gültig ist.

20. Verfahren nach Anspruch 13, wobei die Schritte des Empfangs des momentanen Uhrzeitwerts und der Übertragung des vertrauenswürdigen Uhrzeitwerts nach einem vorgegebenen Zeitplan in einem DRM-System erfolgen.

21. Elektronisches Kommunikationsgerät mit einem Speicher (31, 41), einem Prozessor (33, 43), Kommunikationsmitteln (35, 45) und dem im Speicher enthaltenen Programmcode, welcher die Schritte nach einem der Ansprüche 1 bis 13 ausführt, sobald der Prozessor (33, 43) ihn abarbeitet,
wobei das Kommunikationsgerät einen sicheren Uhrmechanismus (32, 42) aufweist.

22. Elektronisches Kommunikationsgerät nach Anspruch 21, wobei dieses Kommunikationsgerät ein Rechner (2) ist.

23. Elektronisches Kommunikationsgerät nach Anspruch 21, wobei dieses Kommunikationsgerät ein Pager oder eine tragbare Funkkommunikationsausstattung ist.

24. Elektronisches Kommunikationsgerät nach Anspruch 21, wobei dieses Kommunikationsgerät ein Mobiltelefon (1) ist.

25. Server mit einem Speicher (51), einer vertrauenswürdigen Uhr (52), einem Prozessor (53), Kommunikationsmitteln (55) und dem im Speicher enthaltenen Programmcode, welcher die Schritte nach einem der Ansprüche 13 bis 20 ausführt, sobald der Prozessor (53) ihn abarbeitet.

## Revendications

1. Procédé pour la gestion d'une valeur d'horloge de confiance dans un appareil de communication électronique (1, 2), comprenant :
la transmission d'une signature de client numérique qui est unique pour chaque transmission à un fournisseur de temps de confiance (6) ;
la réception d'une valeur d'horloge de confiance en provenance du fournisseur de temps de confiance (6), la signature de serveur numérique étant unique pour chaque transmission ;
la vérification de la valeur d'horloge de confiance ;
**caractérisé par** les étapes suivantes :
de mise à jour d'un mécanisme d'horloge sécurisé (32, 42) de l'appareil de communication électronique (1, 2) ; et
de transmission d'une vérification de la mise à jour du mécanisme d'horloge sécurisé (32, 42) à un serveur (6, 7, 8).

2. Procédé selon la revendication 1, dans lequel l'étape de transmission d'une signature de client numérique comprend la transmission d'une valeur d'horloge courante, et dans lequel les étapes de transmission de la valeur d'horloge courante et de réception de la valeur d'horloge de confiance se produisent selon une planification prédéterminée.

3. Procédé selon la revendication 1, dans lequel les étapes se produisent dans un système DRM (Digital Rights Management pour Gestion de Droits Numériques).

4. Procédé selon la revendication 3, dans lequel la valeur d'horloge de confiance est reçue en même temps qu'un contenu téléchargé ou qu'un certificat de droits.

5. Procédé selon la revendication 1, dans lequel au moins une paire de clés est utilisée pour fournir les signatures numériques.

6. Procédé selon l'une quelconque des revendications 2 à 4, dans lequel le procédé comprend les étapes supplémentaires :
de comparaison de la valeur d'horloge de confiance et d'une restriction temporelle de contenu ayant des droits limités dans le temps ; et
de fourniture d'un accès au contenu si la valeur d'horloge de confiance respecte ladite restriction.

7. Procédé selon la revendication 5, dans lequel l'étape de transmission de la signature de client numérique comprend les étapes supplémentaires :
d'obtention d'une valeur d'horloge courante du mécanisme d'horloge sécurisé (32, 42) ;
de signature de la valeur d'horloge courante du mécanisme d'horloge sécurisé (32, 42) en utilisant une clé privée de l'appareil de communication électronique (1, 2) ;
de stockage de la valeur d'horloge courante signée dans une mémoire (31, 41) de l'appareil de communication électronique (1, 2) ;
de transmission de la valeur d'horloge courante signée en association avec la valeur d'horloge courante au fournisseur de temps de confiance (6) ;
l'étape de réception de la valeur d'horloge de confiance et de la signature de serveur numérique comprend l'étape de réception d'une valeur signée de la valeur d'horloge de confiance et d'une valeur signée de la valeur d'horloge courante en association avec la valeur d'horloge de confiance ;
l'étape de vérification de la valeur d'horloge de confiance comprend les étapes :
de vérification de la signature respective des valeurs d'horloge de confiance et courante en utilisant la clé publique du fournisseur de temps de confiance (6) ;
de comparaison de la valeur d'horloge courante signée et stockée et de la valeur d'horloge courante signée reçue ; et
de mise à jour du mécanisme d'horloge sécurisé (32, 42) avec la valeur d'horloge de confiance reçue si la valeur d'horloge courante signée stockée et la valeur d'horloge courante signée reçue concordent.

8. Procédé selon la revendication 5, dans lequel l'étape de transmission de la signature de client numérique comprend les étapes supplémentaires :
de transmission d'une demande de réglage de l'horloge au fournisseur de temps de confiance (6) ;
de réception d'un certificat contenant la clé publique du fournisseur de temps de confiance (6) ;
de génération d'une clé de session ;
de cryptage de la clé de session en utilisant la clé publique du fournisseur de temps de confiance (6) ;
d'obtention d'une valeur d'horloge courante du mécanisme d'horloge sécurisé (32, 42) ;
de génération d'une valeur HMAC (Hash based Message Authentication Code pour Code d'Authentification de Message par Hâchage) sur la base de la valeur d'horloge courante et de la clé de session pour fournir la signature de client numérique ;
de transmission au fournisseur de temps de confiance (6) de la valeur de la clé de session cryptée et de la valeur HMAC ;
l'étape de réception de la valeur d'horloge de confiance et de la signature de serveur numérique comprend l'étape de réception d'une valeur d'horloge de confiance signée en association avec la valeur d'horloge de confiance ; et
l'étape de vérification de la valeur d'horloge de confiance comprend l'étape de vérification de la valeur d'horloge de confiance signée en utilisant la clé de session.

9. Procédé selon la revendication 5, dans lequel l'appareil de communication électronique (1, 2) et le fournisseur de temps de confiance (6) sont dotés de clés symétriques, et dans lequel l'étape de transmission de la signature de client numérique comprend les étapes supplémentaires :
d'obtention d'une valeur d'horloge courante du mécanisme d'horloge sécurisé (32, 42) ;
de signature de la valeur d'horloge courante du mécanisme d'horloge sécurisé (32, 42) en utilisant une clé symétrique de l'appareil de communication électronique (1, 2) ;
l'étape de réception de la valeur d'horloge de confiance et de la signature de serveur numérique comprend l'étape de réception d'une valeur d'horloge de confiance signée en association avec la valeur d'horloge de confiance ; et
l'étape de vérification de la valeur d'horloge de confiance comprend l'étape de vérification de la valeur d'horloge de confiance signée reçue en utilisant la clé symétrique de l'appareil de communication électronique (1, 2).

10. Procédé selon l'une quelconque des revendications 2 à 5, dans lequel l'étape de transmission de la vérification de la mise à jour du mécanisme d'horloge sécurisé (32, 42) comprend les étapes :
de signature de la valeur d'horloge de confiance en utilisant une clé privée de l'appareil de communication électronique (1, 2) ; et
de transmission de la valeur d'horloge de confiance signée à un serveur (6, 7, 8).

11. Procédé selon l'une quelconque des revendications 2 à 5, dans lequel l'étape de transmission de la vérification de la mise à jour du mécanisme d'horloge sécurisé (32, 42) comprend les étapes supplémentaires :
d'incrémentation de la valeur d'horloge de confiance d'une valeur d'incrémentation ;
de génération d'une valeur HMAC de la valeur d'horloge de confiance incrémentée en utilisant une clé de session ou une clé symétrique pour fournir la signature de client numérique ; et
de transmission de la valeur HMAC à un serveur (6, 7, 8).

12. Procédé selon l'une quelconque des revendications 2 à 4, 7, 10 et 11, dans lequel la valeur d'horloge courante est obtenue en fournissant un nombre aléatoire ou une valeur de compteur.

13. Procédé de transmission d'une valeur d'horloge de confiance d'un fournisseur de temps de confiance (6) à un appareil de communication électronique (1, 2), comprenant :
la réception d'une signature de client numérique qui est unique pour chaque session de mise à jour ;
l'obtention d'une valeur d'horloge de confiance en provenance d'une horloge de confiance (52) ;
la transmission de la valeur d'horloge de confiance et d'une signature de serveur numérique qui est unique pour chaque session de mise à jour à l'appareil de communication électronique (1, 2) ;
**caractérisé par** l'étape suivante :
de réception d'une vérification de la mise à jour d'un mécanisme d'horloge sécurisé (32, 42) de l'appareil de communication électronique (1, 2).

14. Procédé selon la revendication 13, dans lequel l'étape de réception de la signature de client numérique comprend l'étape de réception d'une valeur d'horloge courante d'un mécanisme d'horloge sécurisé de l'appareil de communication électronique (1, 2) ; et
l'étape de transmission de la valeur d'horloge de confiance et de la signature de serveur numérique comprend l'étape supplémentaire de comparaison de la valeur d'horloge courante reçue du mécanisme d'horloge sécurisé (32, 42) de l'appareil de communication électronique (1, 2) et de la valeur d'horloge de confiance de l'horloge de confiance (52).

15. Procédé selon la revendication 13, dans lequel l'étape de réception de la signature de client numérique comprend l'étape de vérification de la signature d'une valeur d'horloge courante en utilisant au moins une paire de clés.

16. Procédé selon la revendication 15, dans lequel l'étape de vérification de la signature de client numérique comprend l'étape supplémentaire de vérification de la signature de la valeur d'horloge courante signée du mécanisme d'horloge sécurisé (32, 42) de l'appareil de communication électronique (1, 2) en utilisant une clé publique de l'appareil de communication électronique (1, 2) ; et
l'étape de transmission de la valeur d'horloge de confiance et de la signature de serveur numérique comprend l'étape de signature de la valeur d'horloge de confiance et de la valeur d'horloge courante en utilisant la clé privée du fournisseur de temps de confiance (6), et la transmission à l'appareil de communication électronique (1, 2) de la valeur d'horloge de confiance signée et de la valeur d'horloge courante signée.

17. Procédé selon la revendication 15, dans lequel l'étape de réception d'une signature de client numérique comprend les étapes supplémentaires :
de réception d'une demande de réglage d'horloge ;
de transmission à l'appareil de communication électronique (1, 2) d'un certificat contenant la clé publique du fournisseur de temps de confiance (6) ;
de réception d'une clé de session ;
de réception d'une valeur HMAC de la valeur d'horloge courante du mécanisme d'horloge sécurisé (32, 42) de l'appareil de communication électronique (1, 2) ;
de vérification de la valeur HMAC reçue en utilisant la clé de session ;
l'étape de transmission de la valeur d'horloge de confiance et de la signature de serveur numérique comprenant les étapes :
de génération d'une valeur HMAC de la valeur d'horloge de confiance en utilisant la clé de session pour fournir la signature de serveur numérique ; et
de transmission de la valeur HMAC à l'appareil de communication électronique (1, 2).

18. Procédé selon la revendication 15, dans lequel l'étape de réception d'une signature de client numérique comprend les étapes supplémentaires :
de réception d'une valeur HMAC de la valeur d'horloge courante du mécanisme d'horloge sécurisé (23, 42) de l'appareil de communication électronique (1, 2) ;
de vérification de la valeur HMAC en utilisant une clé symétrique ;
l'étape de transmission de la valeur d'horloge de confiance et de la signature de serveur numérique comprenant les étapes :
de génération d'une valeur HMAC de la valeur d'horloge de confiance en utilisant la clé symétrique pour fournir la signature de serveur numérique ; et
de transmission de la valeur HMAC à l'appareil de communication électronique (1, 2).

19. Procédé selon la revendication 13, dans lequel le procédé comprend l'étape supplémentaire de décision du fait de savoir si la vérification de la mise à jour du mécanisme d'horloge sécurisé est valide.

20. Procédé selon la revendication 13, dans lequel les étapes de réception de la valeur d'horloge courante et de transmission de la valeur d'horloge de confiance se produisent selon une planification prédéterminée dans un système DRM.

21. Appareil de communication électronique ayant une mémoire (31, 41), un processeur (33, 43), un moyen de communication (35, 45), la mémoire contenant un code de programme destiné à effectuer les étapes selon l'une quelconque des revendications 1 à 13 lorsqu'il est exécuté par ledit processeur (33, 43),
où ledit appareil de communication comprend un mécanisme d'horloge sécurisé (32, 42).

22. Appareil de communication électronique selon la revendication 21, ledit appareil de communication étant un ordinateur (2).

23. Appareil de communication électronique selon la revendication 21, ledit appareil de communication étant un radiomessageur ou un équipement de radiocommunication portable.

24. Appareil de communication électronique selon la revendication 21, ledit appareil de communication étant un téléphone mobile (1).

25. Serveur comprenant une mémoire (51), une horloge de confiance (52), un processeur (53) et un moyen de communication (55), la mémoire contenant un code de programme destiné à effectuer les étapes selon l'une quelconque des revendications 13 à 20 lorsqu'il est exécuté par ledit processeur (55).
